# EUROPEAN PATENT SPECIFICATION

(11) **EP 4 182 609 B1**
(45) Date of publication and mention of the grant of the patent: **09.07.2025**
(21) Application number: 21748930.1
(22) Date of filing: 15.07.2021
(51) Int. Cl.: F24D 3/14

(54) **HEAT TRANSFER PANEL AND METHOD**
WÄRMEÜBERTRAGUNGSPLATTE UND VERFAHREN
PANNEAU DE TRANSFERT DE CHALEUR ET PROCÉDÉ ASSOCIÉ

(30) Priority: 16.07.2020 GB 202010982
(43) Date of publication of application: 24.05.2023
(73) Proprietor: Genuit UFH Ltd, Leeds LS11 5AE (GB)
(72) Inventor: TRIVETT, Darren, Exeter Devon EX2 5GL (GB)
(74) Representative: Noble, Frederick
(86) International application number: PCT/GB2021/051825
(87) International publication number: WO 2022/013563

(56) References cited:
- DE-A1- 102007 039 469
- DE-U1- 202014 101 786
- DE-U1- 202020 101 499
- GB-A- 2 552 804

## Description

### CROSS REFERENCE TO RELATED APPLICATIONS

This application claims priority to GB2010982.3.

### FIELD OF THE INVENTION

The present invention relates to a heat transfer panel and a method.

### BACKGROUND

Heat transfer panels are used in the installation of surface heating and cooling systems, of which underfloor heating systems are presently the most common example. Diffuser plates are commonly used for distribution of heat in dry construction floors (i.e. those without a concrete screed). Diffuser plates are typically made from aluminium or an alloy of aluminium and are pressed into a channel to accept a pipe flanked by wings which transfer heat into the floor. The diffuser plate can either sit into routed insulation or is fixed directly to the battens or joists of a floor. In all instances a covering is laid over the plates, e.g. a floor deck such as chipboard in an underfloor heating system.

A diffuser plate may have two pressed channels for pipes and be fixed to the top of battens or joists within a suspended floor. Insulation is laid loose below the diffuser plate. Diffuser plates are rigid and the pipe can only be inserted where a channel has been formed. This means that the pipe can only enter and leave the plate at the ends making it difficult to lay pipe around obstructions and maintain the pipe in a diffuser plate. The plates have a hard temper to provide more rigidity and are usually between 0.7mm to 1mm thick, although if the plates are not structural they can be as thin as 0.25mm and bonded into insulation. Nevertheless, they are all very difficult to trim on site. Due to the difficulties of drawing aluminium into non-linear channels, diffuser plates are only used where there is a straight length of pipe, and any curves or bends in the pipe very rarely have a diffuser plate installed. Where there is no diffuser plate there is no significant contribution to the heat transfer. Depending on room size, curves and bends typically occupy 20% of the room. In bathrooms where room area is smaller it can be greater than 50%.

Conventionally pipe work is installed in straight runs with curves (where the pipe turns 180 degrees to travel back down the room) at the periphery of the room. In a suspended floor the pipe must pass through the joist. The pipe often crosses the joist in an area that can contravene building regulations (if the joists are not oversized). Joists can be notched between 7% and 25% of the joist length from the point of support. If the pipe work of a conventional system with diffuser plates were to pass through the joists in the correct place the plates would need to be trimmed where the pipe bends through the joist. As a result the unheated area would significantly increase from 20% to 40%. Alternative methods of putting heating into dry construction floors involve using a combination of straight and curve panels, laid such as to be able to install the pipe in a serpentine fashion (going up and down within a room). These products are usually supplied as "straights" and "curves", with a set of curves placed perpendicular to the straights. Having to use different products makes preparation of a bill-of-materials and consequent installation difficult. In non-rectangular rooms it is difficult to apply this method without significant trimming and repositioning of the curve panels.

DE202020101499 U1 discloses a panel for underfloor heating systems as known in the art. The panel may comprise a support plate defining grooves to receive heating pipes. The support plate may be covered in an aluminium foil. The aluminium foil may extend over an arcuate portion of the grooves and have perforations defined therein such that the heating pipes can be pushed through the aluminium foil.

DE102007039469 A1, GB2552804 A, and DE202014101786 U1 disclose other panels for underfloor heating systems as known in the art.

Although different heat transfer panels exist, they each have they own shortcomings. Accordingly, it is desired to provide an improved heat transfer panel.

### SUMMARY

According to a first aspect, there is provided a heat transfer panel according to claim 1.

The first aspect recognizes that a problem with existing arrangements is that the fabrication of the heat transfer panels can be problematic and that the amount of conductive material which contacts the fluid conveying pipe can be less than desired which can lead to poorer heat transfer than is otherwise possible. Accordingly, a panel is provided. The panel may be a heat transfer panel. The heat transfer panel may comprise a substrate sheet or slab. The substrate may define or have at least one surface channel. The surface channel may be dimensioned or formed to receive, retain or hold a pipe. The panel may comprise a layer of conductive material. The layer of conductive material may overlie or be provided on the substrate. The conductive material may have fissures or perforations. The fissures may define or form a tessellated or repeating pattern. The fissures may facilitate or help the conductive material to be divided, separated or partitioned to enable the pipe to be inserted into the surface channel. In this way, the provision of the tessellated pattern makes the fabrication of the panel easier since having a repeated pattern of fissures helps to increase the likelihood that a fissure will be overlying a channel in which the pipe is to be inserted, thus avoiding the need to accurately align the fissures with the channel. In addition, the amount of conductive material which enters the channel is increased which increases contact with the fluid conveying pipe which leads to improved heat transfer.

The heat transfer panel may comprise an outer layer of conductive material overlying the adjacent layer of conductive material, the outer layer of conductive material having fissures which define a second tessellated pattern to facilitate dividing of the outer layer of conductive material to allow insertion of the flexible fluid-conveying pipe into the surface channels. Providing an outer layer enhances the probability that fissure lines will overlie a channel and helps to increase the amount of conductive material which enters the channel upon insertion of the pipe into the channel which enhances heat conduction between the pipe and the conductive material.

The heat transfer panel may comprise at least one intermediate layer of conductive material located between the adjacent layer of conductive material and the outer layer of conductive material, the at least one intermediate layer of conductive material having fissures which define a further tessellated pattern to facilitate dividing of the at least one intermediate layer of conductive material to allow insertion of the flexible fluid-conveying pipe into the surface channels. Hence, additional layers of conductive material may be provided with enhances the probability that fissure lines will overlie a channel and helps to increase the amount of conductive material which enters the channel upon insertion of the pipe into the channel which enhances heat conduction between the pipe and the conductive material.

The heat transfer panel may comprise a plurality of intermediate layers of conductive material located between the adjacent layer of conductive material and the outer layer of conductive material.

The panel may comprise an adhesive layer disposed between the substrate and the adjacent layer of conductive material to adhere the adjacent layer of conductive material to the substrate. Hence, the layer of conductive material may be adhered to the substrate. The adhesive layer may be disposed so that no adhesion occurs over the channels.

The adjacent layer of conductive material may define apertures to facilitate contact between the outer layer of conductive material and/or the intermediate layer(s) of conductive material and the adhesive layer to adhere the outer layer of conductive material and/or the intermediate layer(s) of conductive material to the substrate. Hence, the same adhesive layer may be used to adhere the conductive layers to the substrate.

Each of the at least one intermediate layer of conductive material may define apertures to facilitate contact between the outer layer of conductive material and the adhesive layer to adhere the outer layer of conductive material to the substrate.

The apertures may be located away from the fissures of that conductive layer. Hence, the sheet may be free to separate along the fissures.

Each tessellated pattern other than the second tessellated pattern may comprise a plurality of the apertures, that tessellated pattern defines a pattern width and the plurality of the apertures are positioned across that pattern width. Hence, the apertures may be contained within each tessellated pattern.

The plurality of the apertures may be positioned across the pattern width to match a spatial offset between the adjacent layer of conductive material, the at least one intermediate layer of conductive material and the outer layer of conductive material.

Each tessellated pattern other than the second tessellated pattern may comprise an elongate aperture having an elongate axis orientated along a direction of a spatial offset between the adjacent layer of conductive material, the at least one intermediate layer of conductive material and the outer layer of conductive material.

The adjacent layer of conductive material, the at least one intermediate layer of conductive material and/or the outer layer of conductive material may be positioned to spatially offset the first tessellated pattern, the further tessellated pattern and/or the second tessellated patterns. This again helps improve the probability of a fissure being present over the channel and increases the amount of conductive material which may enter the channel to improve conduction between the pipe and the conductive material.

The adjacent layer of conductive material, the at least one intermediate layer of conductive material and/or the outer layer of conductive material may be spatially offset to locate a corresponding edge of the first tessellated pattern, the further tessellated pattern and/or the second tessellated patterns to be parallel.

The adjacent tessellated pattern may define a pattern width and the at least one intermediate layer of conductive material and the outer layer of conductive material may be spatially offset to locate a corresponding edge of the further tessellated pattern and the second tessellated patterns within the pattern width.

The adjacent tessellated pattern may define a pattern width and the at least one intermediate layer of conductive material and the outer layer of conductive material may be spatially offset to locate a corresponding edge of the further tessellated pattern and the second tessellated patterns evenly spaced within the pattern width.

The adjacent, intermediate and/or outer layers of conductive material may be spatially offset such that a vertex of the first tessellated pattern is located towards a centre of the second and/or further tessellated patterns.

The second and/or further tessellated patterns may have a width which is no wider than the width of the surface channels.

The first, second and/or further tessellated patterns may be configured to at least partially line the surface channels with divided portions of a respective adjacent, outer and/or intermediate conductive layer on insertion of the flexible fluid-conveying pipe into the surface channels.

The first, second and/or further tessellated patterns may be configured to line the surface channels with divided portions of a respective at least one of the adjacent, outer and intermediate conductive layer to at least mid-way along side walls of the surface channels on insertion of the flexible fluid-conveying pipe into the surface channels.

The first, second and/or further tessellated patterns may be configured to line the surface channels with divided portions of a respective at least one of the adjacent, outer and intermediate conductive layers to a position where the flexible fluid-conveying pipe contacts the surface channels on insertion into the surface channels.

The first, second and/or further tessellated patterns may be configured to line the surface channels with divided portions of a respective at least one of the adjacent, outer and intermediate conductive layers to a position where a tangent to the flexible fluid-conveying pipe on insertion into the surface channels becomes vertical.

The fissure lines may define the first, second and/or further tessellated patterns as either a regular or irregular tessellated pattern.

The fissure lines may define the tessellated pattern as a tessellated polygon pattern.

The fissures may define the tessellated pattern as a tessellated regular polygon pattern.

The fissures may define the tessellated pattern as a hexagon, square and/or triangle pattern.

The tessellated pattern may extend across at least that area of the substrate which defines the surface channels.

The tessellated pattern may extend across all of the substrate.

The substrate may incorporate a multiplicity or plurality of gas spaces or voids.

The substrate may be formed from a cellular plastics material.

The substrate may be of a fibrous nature.

The surface channels may form a pattern comprising substantially parallel straight lines joined by curves.

The pattern may comprise two intersecting sets of substantially parallel straight lines.

The curves may be formed by rings which intercept both sets of lines.

The panel may comprise the flexible fluid conveying pipe.

According to a second aspect, there is provided a method according to claim 15.

The method may comprise providing an outer layer of conductive material overlying the adjacent layer of conductive material and defining, with fissures in the outer layer of conductive material, a second tessellated pattern to facilitate dividing of the second layer of conductive material to allow insertion of the flexible fluid-conveying pipe into the surface channels.

The method may comprise providing at least one intermediate layer of conductive material located between the adjacent layer of conductive material and the outer layer of conductive material, and defining with fissures in the at least one intermediate layer of conductive material a further tessellated pattern to facilitate dividing of the at least one intermediate layer of conductive material to allow insertion of the flexible fluid-conveying pipe into the surface channels.

The method may comprise providing a plurality of intermediate layers of conductive material located between the adjacent layer of conductive material and the outer layer of conductive material.

The method may comprise disposing an adhesive layer between the substrate and the adjacent layer of conductive material to adhere the adjacent layer of conductive material to the substrate.

The method may comprise defining apertures in the adjacent layer of conductive material to facilitate contact between the outer layer of conductive material and/or the intermediate layer(s) of conductive material and the adhesive layer to adhere the outer layer of conductive material and/or the intermediate layer(s) of conductive material to the substrate.

The method may comprise defining apertures in each the at least one intermediate layer of conductive material to facilitate contact between the outer layer of conductive material and the adhesive layer to adhere the outer layer of conductive material to the substrate.

The method may comprise locating the apertures away from the fissures of that conductive layer.

Each tessellated pattern other than the second tessellated pattern may comprise a plurality of the apertures, that tessellated pattern defines a pattern width and the method may comprise positioning the plurality of the apertures across that pattern width.

The method may comprise positioning the plurality of the apertures across the pattern width to match a spatial offset between the adjacent layer of conductive material, the at least one intermediate layer of conductive material and/or the outer layer of conductive material.

Each tessellated pattern other than the second tessellated pattern may comprise an elongate aperture having an elongate axis orientated along a direction of a spatial offset between the adjacent layer of conductive material, the at least one intermediate layer of conductive material and the outer layer of conductive material.

The method may comprise positioning the adjacent layer of conductive material, the at least one intermediate layer of conductive material and/or outer layer of conductive material to spatially offset the first, second and/or further tessellated patterns.

The method may comprise spatially offsetting the adjacent layer of conductive material, the at least one intermediate layer of conductive material and/or the outer layer of conductive material to locate a corresponding edge of the first tessellated pattern, the further tessellated pattern and/or the second tessellated patterns to be parallel.

The adjacent tessellated pattern may define a pattern width and the method may comprise spatially offsetting the at least one intermediate layer of conductive material and the outer layer of conductive material to locate a corresponding edge of the further tessellated pattern and the second tessellated patterns within the pattern width.

The adjacent tessellated pattern may define a pattern width and the method may comprise spatially offsetting the at least one intermediate layer of conductive material and the outer layer of conductive material to locate a corresponding edge of the further tessellated pattern and the second tessellated patterns evenly spaced within the pattern width.

The method may comprise positioning the adjacent. intermediate and/or outer layers of conductive material to locate a vertex of the first tessellated pattern towards a centre of the second and/or further tessellated patterns.

The method may comprise dimensioning the first, second and/or further tessellated patterns to locate a fissure over the surface channels.

The method may comprise dimensioning the second and/or further tessellated patterns to have a width which is no wider than the width of the surface channels.

The method may comprise dimensioning the first, second and/or further tessellated patterns to at least partially line the surface channels with divided portions of a respective at least one of the adjacent, intermediate and/or outer conductive layer on insertion of the flexible fluid-conveying pipe into the surface channels.

The method may comprise dimensioning the first, second and/or further tessellated patterns to line the surface channels with divided portions of a respective at least one of the adjacent, intermediate and/or outer conductive layer to at least mid-way along side walls of the surface channels on insertion of the flexible fluid-conveying pipe into the surface channels.

The method may comprise dimensioning the first, second and/or further tessellated patterns to line the surface channels with divided portions of a respective at least one of the adjacent, intermediate and/or outer conductive layer to a position where the flexible fluid-conveying pipe contacts the surface channels on insertion into the surface channels.

The method may comprise dimensioning the first, second and/or further tessellated patterns to line the surface channels with divided portions of a respective at least one of the adjacent, intermediate and/or outer conductive layer to a position where a tangent to the flexible fluid-conveying pipe on insertion into the surface channels becomes vertical.

The method may comprise forming the fissures to define the first, second and/or further tessellated patterns as one of a regular and irregular tessellated pattern.

The method may comprise forming the fissures to define the tessellated pattern as a tessellated polygon pattern.

The method may comprise forming the fissures to define the tessellated pattern as a tessellated regular polygon pattern.

The method may comprise forming the fissures to define the tessellated pattern as a tessellated hexagon, square and/or triangle pattern.

The method may comprise extending the tessellated pattern across at least that area of the substrate which defines the surface channels.

The method may comprise extending the tessellated pattern across all of the substrate.

The method may comprise incorporating a multiplicity of gas spaces in the substrate.

The method may comprise forming the substrate from a cellular plastics material.

The substrate may be of a fibrous nature.

The method may comprise forming a pattern comprising substantially parallel straight lines joined by curves with the surface channels.

The pattern may comprise two intersecting sets of substantially parallel straight lines.

The curves may be formed by rings which intercept both sets of lines.

The method may comprise fitting the flexible fluid-conveying pipe in at least one of the surface channels.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 is an exploded isometric view of a portion of a heat transfer panel according to one embodiment;
Figure 2 shows an example layout for the channels;
Figure 3 shows an example spatial relationship between the patterns of the upper and lower layers;
Figures 4A and 4B show separation of the upper and lower layers along fissure lines upon insertion of a pipe;
Figure 5 shows an example installation;
Figure 6 illustrates schematically a portion of an arrangement of heat conducting layer according to one embodiment;
Figure 7 shows an example installation;
Figures 8 and 9 illustrate an arrangements of apertures; and
Figure 10 illustrates offsetting layers.

### DESCRIPTION OF THE EMBODIMENTS

Before discussing embodiments in any more detail, first an overview will be provided. Some embodiments provide a panel for use in an underfloor heating or cooling system, or the like. The panel has a substrate or slab layer into which recesses or channels are formed for holding typically a flexible pipe. The panel has one or more layers of a conductive material which are fixed to the surface of the substrate. The conductive layer is provided with a tessellated or tiled pattern of geometric shapes which are formed in that layer by lines of perforations or fissures in the conductive layer. When a pipe is to be installed into the panel, it is pushed against the layer of conductive material overlying the channel into which the pipe is to be located and the layer of conductive material separates, splits or divides along the fissure lines to enable the pipe to be fitted into the channel. Forming a tessellated pattern across the conductive layer helps to improve the likelihood that fissures are provided over the region of the channels which makes the panels easier to manufacture. The presence of the fissure lines helps to constrain how the layer of conductive material separates and the separate portions of the conductive layer on either side of the pipe are typically pushed by the pipe along the sidewalls of the channels to provide a conductive path between the pipe and the conductive material extending across the surface of the substrate. Providing one or more further layers of conductive material with a tessellated pattern also helps to improve the likelihood that fissures are provided over the region of the channels and helps to increase the amount of contact between the pipe and the conductive layers extending across the surface of the substrate to enhance heat transfer between the pipes and the surface of the substrate. In some embodiments, the conductive layer proximate the substrate has apertures to enable the adhesive bonding that conductive layer to the substrate to also bond the further layer(s) of conductive material also to the substrate using the same adhesive. As mentioned above, the provision of a tessellated pattern in the conductive material makes the manufacture of the heat transfer panel easier, since precise alignment of the fissures or perforations with the underlying channels is not required, and also helps to align the channels with more conductive material than would otherwise reliably be possible.

### Heat Transfer Panel

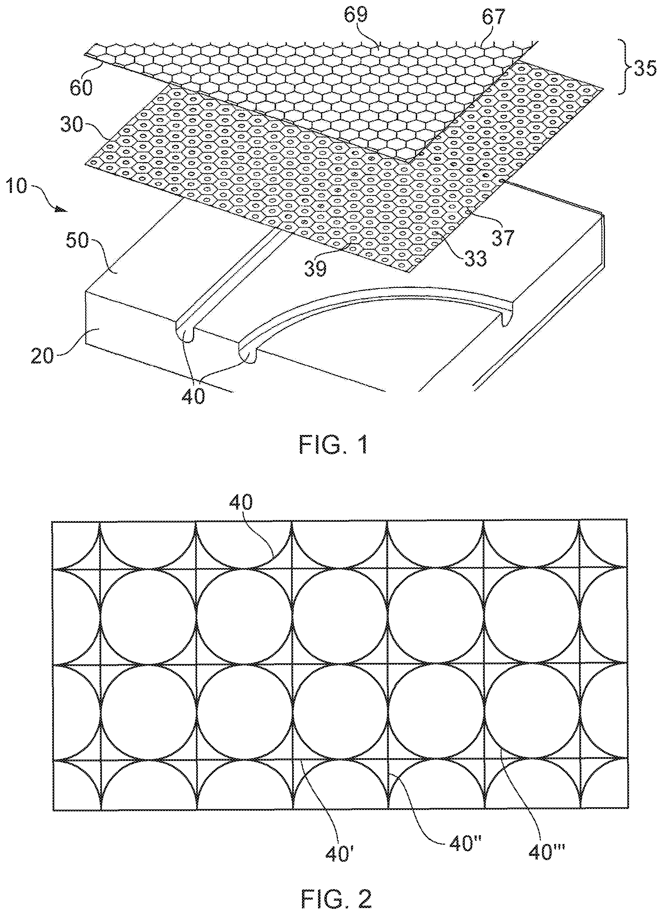

Figure 1 is an exploded isometric view of a portion of a heat transfer panel 10 according to one embodiment. The heat transfer panel 10 has a support board or substrate 20 which is covered by a thinner heat conducting layer 30. The substrate 20 is formed of a suitable rigid or slightly rigid flexible structural material. The substrate 20 will normally act as a thermally insulating layer. In such cases, the substrate 20 will typically incorporate a plurality of spaces filled with air, argon or another suitable gas in order to reduce the overall weight of the substrate as well as providing improved heat insulation properties. Suitable materials might therefore include foamed plastics and materials of a fibrous nature. In some applications, the substrate 20 may be required to provide enhanced sound insulation, in which case the substrate will be made from a solid dense board.

### Channels

Typically, the substrate 20 is formed with an array of interconnecting channels 40 into which a flexible fluid conducting pipe (not shown) can be inserted. In the orientation shown, the channels 40 open through an upper surface 50 of the substrate 20 or, in other words, the upper surface 50 of the substrate 20 defines the channels 40. It will be appreciated that the substrate 20 can be used in any orientation. Although the channels 40 are shown having a U-shaped cross-section, the channels 40 can have any suitable cross-section which enables pipes (not shown) to be introduced and preferably retained in place by the channel 40. For example, the channels 40 may be formed having a slight horseshoe cross-section with opposing inwardly extending lips in order to narrow the channel at its opening to help retain the pipe in place.

Figure 2 shows a layout for the channels 40. It will be appreciated that this is only by way of illustration and other channel arrangements are possible. In the illustrated configuration, the channel pattern includes two intersecting sets of straight channels as well as interconnecting circular channels. The straight channels are parallel and equally spaced and two of the sets of straight channels are mutually perpendicular to form a grid of squares, each of which contains a circular channel intersecting the four sides of the square at their midpoints. At the sides of the substrate 20, the circular channels are bisected by the edges of the panel leaving only half-circle channels with quarter circle channels remaining at the four corners.

### Heat Conducting Layer - 1^{st} Arrangement

Returning now to Figure 1, the heat conducting layer 35 is formed from one or more sheets of a bendable material such as aluminium, copper or other metal foil or conductive material (for example graphene) which can be much thinner than conventional diffuser plates, typically only 200 microns thick. The heat conducting layer 35 is bonded to the surface 50 in any suitable manner to form a substantially planar layer which spans the channels 40 and completely covers them prior to use. Although the heat conducting layer 35 can comprise a single sheet, the heat conducting layer 35 preferably comprises at least two layers, a lower (adjacent) layer 30 and an upper (outer) layer 60 which are superimposed or overlie each other with the lower layer 30 being proximate the substrate 20 and the upper layer 60 being distal the substrate 20. In the arrangement shown in Figure 1, an adhesive is applied to the surface 50 and the lower layer 30 is bonded to the surface 50 by the adhesive. Apertures 33 in the lower layer 30 expose the adhesive on the surface 50 to the upper layer 60 which also then bonds to the adhesive on the surface 50 through the apertures 33 to directly bond the upper layer 60 to the substrate 20.

### Pattern

The lower layer 30 and upper layer 60 are provided with fissure lines 37, 67 which define a tessellated pattern across the lower layer 30 and upper layer 60 respectively. In this example, the fissures 37, 67 define a regular hexagonal pattern. However, it will be appreciated that other tessellated patterns are possible. Also, in this example the fissure lines 37, 67 extend across the whole surface of the lower layer 30 and upper layer 60, but it will be appreciated that this need not be the case and that the tessellated pattern may be provided across just a portion of the lower layer 30 and upper layer 60 to overlie the channels 40. The size of the hexagons 39, 69 is dimensioned in relation to the size of the channels 40. In particular, the hexagons 39, 69 are dimensioned to be smaller than the width of the channels 40 so that a hexagon 39, 69 is unlikely to span the entire width of the channels 40 and thus resist the layers being separated along the fissure lines 37, 67. For example, for a 12mm width channel, a 19mm hexagon is effective whilst for a 12mm width channel, a 16mm hexagon is used.

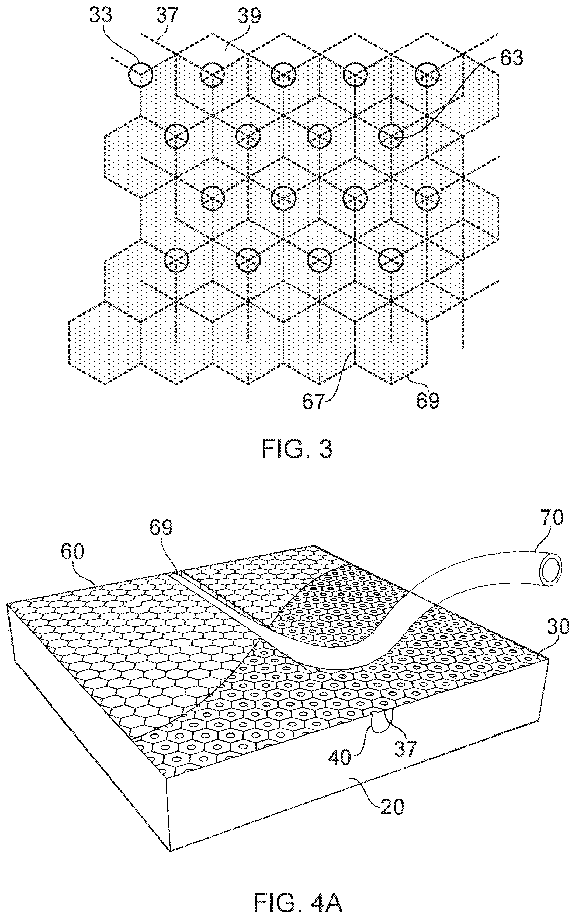

Figure 3 shows the positional relationship of the lower layer 30 with respect to the upper layer 60. The hexagons 39 of the lower layer 30 and the hexagons 69 of the upper layer 60 are spatially offset. In particular, a vertex 63 formed by the fissure lines 67 of three adjacent hexagons 69 is positioned to overlie the centre of a hexagon 39. This staggered alignment helps to provide at least some conductive material on both sides of the channel as a pipe is placed into a channel 40, as will be described in more detail below. Although in this embodiment the hexagons 39, 69 are spatially offset in the two major axes across the surface of the substrate 20, this need not be the case and they may instead only be spatially offset in one of the major axes, as will be described in more detail below.

### Pipe Insertion

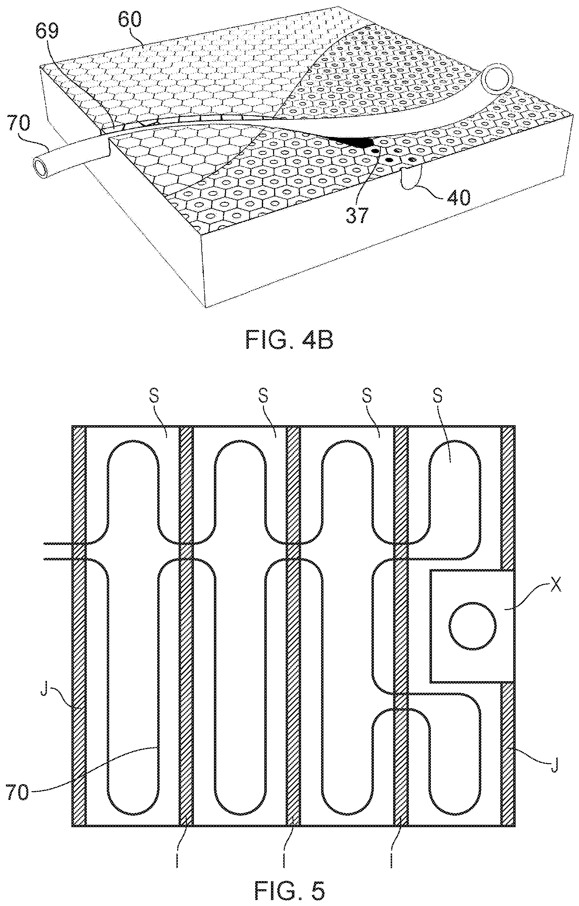

As can be seen in Figures 4A and 4B (in which a portion of the upper layer 60 has been removed to show a portion of the lower layer 30), as the pipe 70 is inserted into the channel 40, the upper layer 60 splits along the fissure lines 67 and portions of the hexagons 69 line the sidewalls of the channel 40. Likewise, the fissure lines 37 of the lower layer 30 split and hexagons 39 also line the sidewalls of the channel 40. This helps to provide a conductive path from both sides of the pipe 70 through the portions of the lower layer 30 and upper layer 60 lining the sidewalls of the channels 40 to facilitate heat conduction between lower layer 30 and upper layer 60 extending across the surface 50 and the fluid flowing through the pipe 70. In other words, due to the path of the fissure lines 37, 67, the lower layer 30 and upper layer 60 form flaps on opposite sides of the channel 40 which are deflected inwards as the pipe 70 is inserted to become sandwiched between the pipe 70 and the walls of the channel 40. By using two or more layers 30, 60, the flaps form a substantially continuous lining along each side of the channel 40 and can extend to the bottom of the channel 40, which would not be achieved using a single layer. For example, if the fissures extended only straight down the centre of a channel 40, there would be very little, if any, contact with the pipe 70. Taking a 15 mm pipe 70 as an example, the flap in these circumstances would be 7.5 mm wide which, when pushed into the channel 40, would only meet pipe at the point where the pipe 70 first touches the substrate 20 7.5 mm from the surface. However, by having fissures 37, 67 which do not extend straight down the centre of a channel 40 and which are offset, then the flap can be up to 15 mm wide and so extend further into the channel 40.

### Heat Conducting Layer - 2^{nd} Arrangement

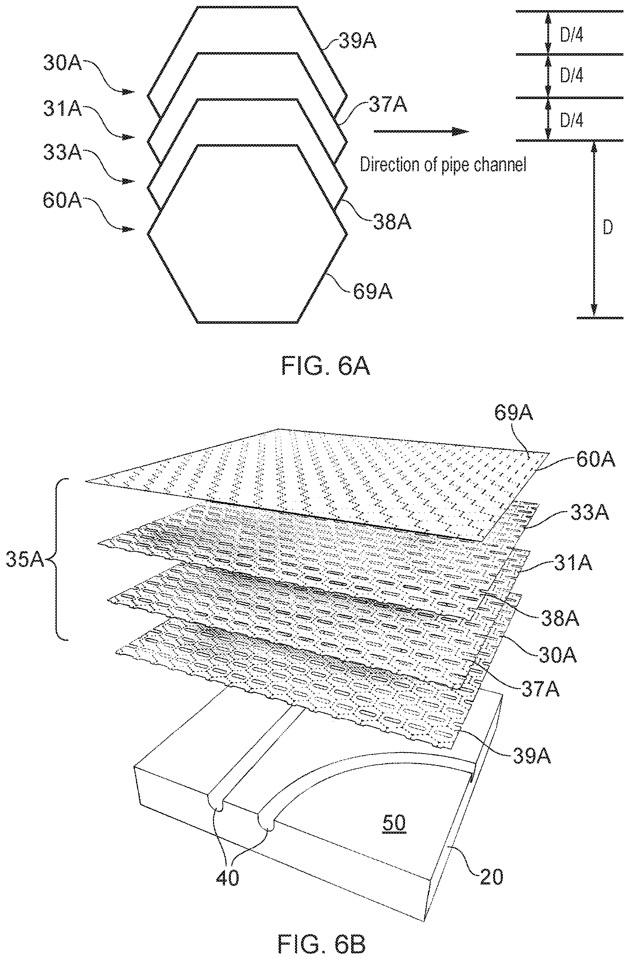

Figure 6A illustrates schematically a portion of an arrangement of heat conducting layer 35A formed from multiple sheets (in this arrangement, 4 sheets or plies of 25 or 50 microns thickness with the apertures omitted to improve clarity) of a bendable material such as aluminium, copper or other metal foil or conductive material (for example graphene) which can be much thinner than conventional diffuser plates, typically only 100 or 200 microns thick in total. Figure 6B illustrates schematically the arrangement of the heat conducting layer 35A in relation to the substrate 20. The heat conducting layer 35A is bonded to the surface 50 in any suitable manner to form a substantially planar layer which spans the channels 40 and completely covers them prior to use.

The heat conducting layer 35A is formed of four layers, a lower (adjacent) layer 30A and an upper (outer) layer 60A which are superimposed or overlie each other with the lower layer 30A being proximate the substrate 20 and the upper layer 60 being distal the substrate 20. Between the lower layer 30A and the upper layer 60A are a first intermediate layer 31A overlying the lower layer 30A and a second intermediate layer 33A overlying the first intermediate layer 31A.

As will be described in more detail below, similar to the arrangement shown in Figure 1, an adhesive is applied to the surface 50 and the lower layer 30A is bonded to the surface 50 by the adhesive. Apertures in the lower layer 30A expose the adhesive on the surface 50 to first intermediate layer 31A. Apertures in the first intermediate layer 31A expose the adhesive on the surface 50 to the second intermediate layer 33A. Apertures in the second intermediate layer 33A expose the adhesive on the surface 50 to the upper layer 60A.

### Pattern

The lower layer 30A, the first intermediate layer 31A, the second intermediate layer 33A and the upper layer 60A are provided with fissure lines which define a tessellated pattern across the lower layer 30A, the first intermediate layer 31A, the second intermediate layer 33A and the upper layer 60A respectively. In this example, the fissures define a regular hexagonal pattern. However, it will be appreciated that other tessellated patterns are possible. Also, in this example the fissure lines extend across the whole surface of the lower layer 30A, the first intermediate layer 31A, the second intermediate layer 33A and the upper layer 60A, but it will be appreciated that this need not be the case and that the tessellated pattern may be provided across just a portion of the lower layer 30A, the first intermediate layer 31A, the second intermediate layer 33A and the upper layer 60A to overlie the channels 40. The size of the hexagons is dimensioned in relation to the size of the channels 40. In particular, the hexagons are dimensioned to be smaller than the width of the channels 40 so that a hexagon is unlikely to span the entire width of the channels 40 and thus resist the layers being separated along the fissure lines. For example, for a 12mm width channel, a 19mm hexagon is effective whilst for a 12mm width channel, a 16mm hexagon is used.

As can be seen in Figure 6A which shows the positional relationship of the lower layer 30A with respect to the first intermediate layer 31A, the second intermediate layer 33A and the upper layer 60A. The hexagons 39A of the lower layer 30A, the hexagons 37A of the first intermediate layer 31A, the hexagons 38A of the second intermediate layer 33A and the hexagons 69A of the upper layer 60 are spatially offset. In particular, a corresponding edge of each hexagon is arranged to be parallel with respect to each other with the overlying hexagons 37A, 38A, 69A being evenly distributed across the width of the hexagon 39A. In other words, the hexagons are spaced apart equally along one major axis of the surface 50. For example, if the width of the hexagons is a distance D and the total number of layers is N, then each overlaid hexagon is offset from the underlying hexagon by D/N. For the 4 layer arrangement shown in Figure 6, each hexagon is offset by D/4. Typically, the offset is arranged to be parallel to the majority direction of the channels 40.

This staggered alignment helps to provide at least some conductive material on both sides of the channel 40 as a pipe is placed into a channel 40, as will be described in more detail below. Although in this embodiment the hexagons 39A, 37A, 38A, 69A are spatially offset in one major axes across the surface of the substrate 20, this need not be the case and they may instead be spatially offset in two of the major axes in a similar manner to that described above.

### Pipe Insertion

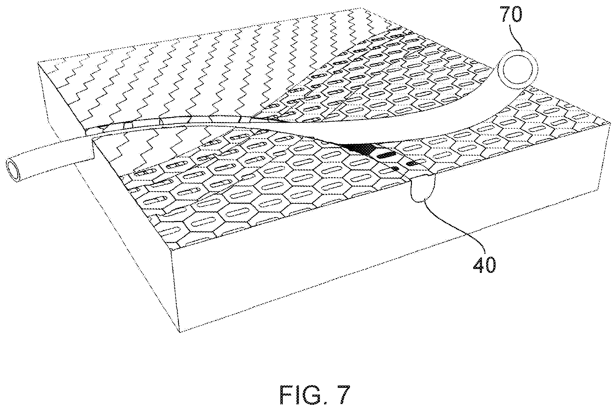

As can be seen in Figure 7 (in which a portion of the upper layer 60A, the first intermediate layer 31A and the second intermediate layer 33A has been removed to show a portion of the lower layer 30A), as the pipe 70 is inserted into the channel 40, the upper layer 60A splits along the fissure lines and portions of the hexagons 69A line the sidewalls of the channel 40. Likewise, the fissure lines of the lower layer 30A split and portions of the hexagons 39A also line the sidewalls of the channel 40. Similarly, the fissure lines of the first intermediate layer 31A and the second intermediate layer 37A split and portions of the hexagons 38A also line the sidewalls of the channel 40. This helps to provide a conductive path from both sides of the pipe 70 through the portions of the lower layer 30A, the first intermediate layer 31A, the second intermediate layer 33A and the upper layer 60A lining the sidewalls of the channels 40 to facilitate heat conduction between lower layer 30A and upper layer 60A extending across the surface 50 and the fluid flowing through the pipe 70. In other words, due to the path of the fissure lines, the lower layer 30A, the first intermediate layer 31A, the second intermediate layer 33A and the upper layer 60A form flaps on opposite sides of the channel 40 which are deflected inwards as the pipe 70 is inserted to become sandwiched between the pipe 70 and the walls of the channel 40. By using four or more layers the flaps form a substantially continuous lining along each side of the channel 40 and can extend to the bottom of the channel 40, which would not be achieved using a single layer. For example, if the fissures extended only straight down the centre of a channel 40, there would be very little, if any, contact with the pipe 70. Taking a 15 mm pipe 70 as an example, the flap in these circumstances would be 7.5 mm wide which, when pushed into the channel 40, would only meet pipe at the point where the pipe 70 first touches the substrate 20 7.5 mm from the surface. However, by having fissures which do not extend straight down the centre of a channel 40 and which are offset, then the flap can be up to 15 mm wide and so extend further into the channel 40.

### Gluing Apertures

As mentioned above, embodiments utilise apertures which facilitate gluing of layers to the substrate 20. Depending on the production process, 3 different configurations are envisaged which are: larger apertures, smaller apertures and lozenge or elongate apertures. It is preferable if the apertures are formed by perforation rather than by punching. As such, smaller pairs of apertures may be suitable. If punching is required then larger apertures are more suitable as are elongate apertures. However, it is preferable to reduce the amount of material removed as this affects the thermal performance of the heat transfer panel.

The aperture layout is typically common for each layer which contains such apertures (typically all layers except the outer layer). When there are M layers that contain apertures, then those layers are arranged to have M sets of spatially offset apertures, typically evenly spaced across the width of the tessellated shape.

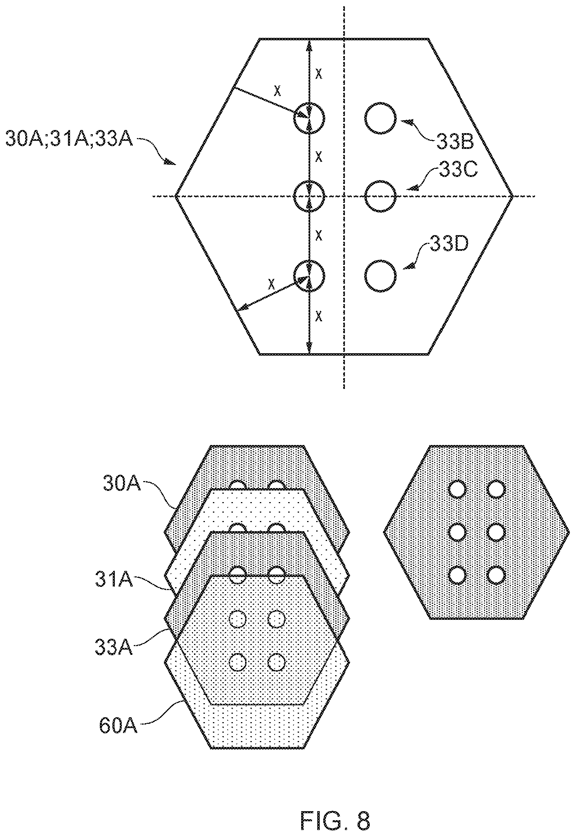

For example, Figure 8 illustrates an arrangement of the apertures for the lower layer 30A, the first intermediate layer 31A and the second intermediate layer 33A. Because there are four layers in total, three pairs of apertures 33B, 33C, 33D are provided, each spaced D/4 apart. In other words, the first pair of apertures 33B are located at 25% of the width of the hexagon, the second pair of apertures 33C are located at 50% of the width of the hexagon and the third pair of apertures 33D are located at 75% of the width of the hexagon. As each layer is applied and offset, the glue from the layers below will still be exposed to the overlying layers. In particular, the pair of apertures 33B provide adhesion for the first intermediate layer 31A, the pair of apertures 33C provide adhesion for the second intermediate layer 33A and the pair of apertures 33D provide adhesion for the upper layer 60A.

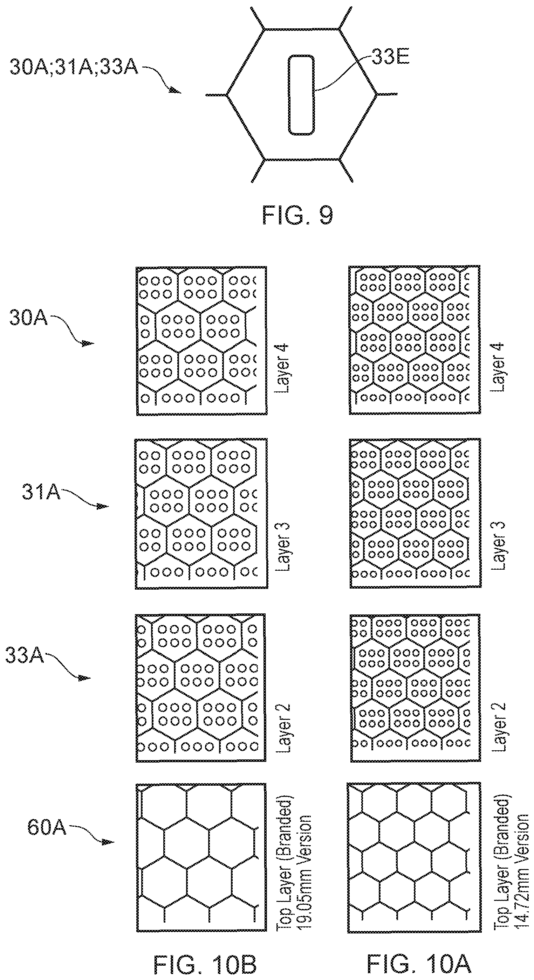

In another embodiment, rather than using individual apertures, instead a single larger aperture 33E may be used as illustrated in Figure 9. The aperture 33E is elongate or lozenge shaped and although its length is fixed to extend between 25% and 75% of the width of the hexagon (for a four layer arrangement), the width can be made a thin as possible. The aperture 33E may also be punched or preferably perforated.

To apply the conductive layers, the four layers could be interwound with the offset prior to being applied to the substrate 20. Equally, they could be applied individually but at the same time. The conductive layers could also be perforated as it is applied. Some caution is needed as the individual layers will be difficult to roll as glue will be exposed to the rollers through the apertures.

As show in Figure 10 which shows an arrangement for 12mm to 15mm pipes (Figure 10A) and an arrangement for 16mm to 18mm pipes (Figure 10B), there is a spatial offset in the conductive layers and they need to be applied in a certain way. For the avoidance of doubt, as can be seen, the layers 30A, 31A, 33A are identical, but spatially offset. To get the offset, either different rolls are needed (4 rolls per product) with the offset put into the pattern or, to use the same rolls, the substrate 20 would have to be turned 90° (so the straight channel is 90° to the direction of travel) when fed through the gluing machine, this way the conductive layers can be offset when it is set up but be the same. One approach for achieving the offset is to place holes down the side of the conductive layers rolls to provide an 'index' and the conductive layers are fed together on a roll with 'teeth' at the ends much like a dot matrix printer.

The heat transfer panel 10 can easily be cut into smaller sections for use in any particular application. An important feature of the present heat transfer panel 10 is the ability to form 180 degree bends at opposite ends of two straight runs of pipe whilst still maintaining efficient thermal contact with the heat-conductive layer 35. This is achieved by running the pipe 70 around one half of a circle 40‴ between two parallel straight sections 40' or 40". Thus, as shown in Figure 5 for example, sections S of the panel 10 can be mounted between joists J. The pipe 70 can be routed entirely within the sections S except when crossing joists J, where the pipe 70 exits from the edges via selected part circles 40‴ or appropriate straight sections 40' and 40".

Figure 5 also shows how the panels 10 allow the pipe 10 to leave the panel 10 and pass through a joist J at any convenient position enabling the installer to comply with building regulations without trimming or leaving panels 10 out, thereby reducing the heat transfer capability of the system.

Figure 5 further demonstrates how the pipe 70 can easily be routed around an obstacle X.

The pipe can be used to carry either warm or cool water or any other suitable fluid. The contact between the pipe and the conductive layer enables heat to be transferred to or from the overlying structure (floor, ceiling etc.) either in a heating system where warm water is circulated through the pipes or for heat to be extracted from the structure in a cooling system where cool water is circulated through the pipes.

The heat transfer panel has many advantages over conventional products. Since the use of this type of diffuser creates a heat transfer panel that is universal (no "straights" and "curves") a single product can be used for an entire floor. Therefore, the quantities needed are very easy to calculate from the room area. Design and installation are also greatly simplified for smaller rooms with obstacles. The panel allows pipe to be installed in any direction so that the pipe can be run around obstacles. Different panels are not needed, nor the manipulation or trimming of panels. Importantly, the panel will maintain heat transfer in this area whereas conventional diffuser plate systems will not. Non-rectangular rooms with straights and curves are also greatly simplified. The panel is installed and trimmed in the same way as a normal insulation or flooring product. Only a simple design is required to show where the pipe work may go.

As the pipe inside the heat transfer panel is consistently in contact with an adjacent area of the conductive material via the flaps created when the pipe is pushed in, there is efficient heat transfer in all areas. With curves or bends in conventional diffuser plate systems this is not the case and there is a significant reduction in heat output from these areas. Indeed, in terms of heat performance, for the same conductive layer thickness, testing has shown that the embodiments provide a 25% higher output than slitting the conductive layers along the centre line. Although a panel with fully lined channels has a 2% higher output than the embodiments, the embodiments provide a higher heat output around the curves compared to slitting (26% higher) or unfoiled (80% higher). Therefore, across a system the embodiment performs better than fully lined aluminium (in the straights and slit/no aluminium around the curves). Furthermore, it is expected that compared to rigid diffusers, the embodiments will perform better due to better contact around the curves.

In summary, some embodiments allow much greater conductive layer(s) contact with the pipe in straights compared to a regular 'slit' aluminium layer. The same conductive layer(s) can be applied to any router pattern with the same result. The product should be cheaper to make than systems where the channel is fully lined with foil, or those that use a diffuser plate. The product is easy to cut and trim. The conductive layer(s) break easily and consistently. The product provides a high system output (for comparable thickness of aluminium) due to the even distribution of heat over straight and curved (loop) sections (where the latter is extremely difficult to apply a diffuser due to its shape).

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims.

## Claims

1. A heat transfer panel (10), comprising:
a substrate (20) defining an array of interconnecting surface channels (40) dimensioned to receive a flexible fluid-conveying pipe; and
an adjacent layer (30) of conductive material overlying said substrate and having fissures which define a first tessellated pattern to facilitate dividing of said adjacent layer of conductive material to allow insertion of said flexible fluid-conveying pipe into said surface channels, wherein said first tessellated pattern has a width which is no wider than a width of said surface channels.

2. The heat transfer panel of claim 1, comprising an outer layer (60) of conductive material overlying said adjacent layer of conductive material, said outer layer of conductive material having fissures which define a second tessellated pattern to facilitate dividing of said outer layer of conductive material to allow insertion of said flexible fluid-conveying pipe into said surface channels.

3. The heat transfer panel of claim 2, comprising at least one intermediate layer of conductive material located between said adjacent layer of conductive material and said outer layer of conductive material, said at least one intermediate layer of conductive material having fissures which define a further tessellated pattern to facilitate dividing of said at least one intermediate layer of conductive material to allow insertion of said flexible fluid-conveying pipe into said surface channels.

4. The heat transfer panel of any preceding claim, comprising an adhesive layer disposed between said substrate and said adjacent layer of conductive material to adhere said adjacent layer of conductive material to said substrate.

5. The heat transfer panel of claim 4 when dependent on claim 3, wherein said adjacent layer of conductive material defines apertures to facilitate contact between at least one of said outer layer of conductive material and said at least one intermediate layer of conductive material and said adhesive layer to adhere at least one of said outer layer of conductive material and said at least one intermediate layer of conductive material to said substrate.

6. The heat transfer panel of claim 4 or 5 when dependent on claim 3, wherein each of said at least one intermediate layer of conductive material defines apertures to facilitate contact between said outer layer of conductive material and said adhesive layer to adhere said outer layer of conductive material to said substrate.

7. The heat transfer panel of any one of claims 2 to 6, wherein each tessellated pattern other than said second tessellated pattern comprises a plurality of said apertures, that tessellated pattern defines a pattern width and said plurality of said apertures are positioned across that pattern width, optionally wherein said plurality of said apertures are positioned across said pattern width to match a spatial offset between said adjacent layer of conductive material, said at least one intermediate layer of conductive material and said outer layer of conductive material.

8. The heat transfer panel of any one of claims 3 to 7, wherein said adjacent layer of conductive material, said at least one intermediate layer of conductive material and said outer layer of conductive material are positioned to spatially offset said first tessellated pattern, said intermediate tessellated pattern and said second tessellated patterns.

9. The heat transfer panel of any one of claims 3 to 8, wherein said adjacent layer of conductive material, said at least one intermediate layer of conductive material and said outer layer of conductive material are spatially offset to locate a corresponding edge of said first tessellated pattern, said intermediate tessellated pattern and said second tessellated patterns to be parallel.

10. The heat transfer panel of any one of claims 3 to 9, wherein at least one of said adjacent, outer and intermediate layers of conductive material are spatially offset such that a vertex of said first tessellated pattern is located towards a centre of at least one of said second and further tessellated patterns.

11. The heat transfer panel of any one of claims 3 to 10, wherein at least one of said second and further tessellated patterns have a width which is no wider than said width of said surface channels.

12. The heat transfer panel of any one of claims 3 to 11, wherein at least one of said first, second and further tessellated patterns are configured to:
at least partially line said surface channels with divided portions of a respective at least one of said adjacent, outer and intermediate conductive layers on insertion of said flexible fluid-conveying pipe into said surface channels;
line said surface channels with divided portions of a respective at least one of said adjacent, outer and intermediate conductive layers to at least mid-way along side walls of said surface channels on insertion of said flexible fluid-conveying pipe into said surface channels;
line said surface channels with divided portions of a respective at least one of said adjacent, outer and intermediate conductive layers to a position where said flexible fluid-conveying pipe contacts said surface channels on insertion into said surface channels; and/or
line said surface channels with divided portions of a respective at least one of said first, second and further conductive layers to a position where a tangent to said flexible fluid-conveying pipe on insertion into said surface channels becomes vertical.

13. The heat transfer panel of any one of claims 3 to 12, wherein said fissures define at least one of said first, second and further tessellated patterns as one of: a regular tessellated pattern; an irregular tessellated pattern; a tessellated polygon pattern; a tessellated regular polygon pattern; a tessellated hexagon; a tessellated square; and a tessellated triangle pattern.

14. The heat transfer panel of any preceding claim, wherein said tessellated patterns extend across at least that area of said substrate which defines said surface channels, and preferably across all of said substrate.

15. A method, comprising:
providing a substrate defining an array of interconnecting surface channels dimensioned to receive a flexible fluid-conveying pipe;
providing a first layer of conductive material overlying said substrate and defining, with fissures in said first layer of conductive material, a first tessellated pattern to facilitate dividing of said first layer of conductive material to allow insertion of said flexible fluid-conveying pipe into said surface channels;
dimensioning said first tessellated pattern to have a width which is no wider than a width of said surface channels.

## Patentansprüche

1. Wärmeübertragungsplatte (10), umfassend:
ein Substrat (20), das eine Anordnung von miteinander verbundenen Oberflächenkanälen (40) definiert, die bemessen sind, um ein flexibles flüssigkeitsführendes Rohr aufzunehmen; und
eine angrenzende Schicht (30) aus leitfähigem Material,
welche auf dem Substrat aufliegt und Risse aufweist, welche ein erstes mosaikartiges Muster definieren, um das Unterteilen der angrenzenden Schicht aus leitfähigem Material zu erleichtern, um das Einführen des flexiblen flüssigkeitsführenden Rohres in die Oberflächenkanäle zu erlauben, wobei das erste mosaikartige Muster eine Breite aufweist, die nicht größer als eine Breite der Oberflächenkanäle ist.

2. Wärmeübertragungsplatte nach Anspruch 1, welche eine Außenschicht (60) aus leitfähigem Material umfasst, die auf der angrenzenden Schicht aus leitfähigem Material aufliegt, wobei die Außenschicht aus leitfähigem Material Risse aufweist, welche ein zweites mosaikartiges Muster definieren, um das Unterteilen der Außenschicht aus leitfähigem Material zu erleichtern, um das Einführen des flexiblen flüssigkeitsführenden Rohres in die Oberflächenkanäle zu erlauben.

3. Wärmeübertragungsplatte nach Anspruch 2, welche mindestens eine Zwischenschicht aus leitfähigem Material umfasst, die sich zwischen der angrenzenden Schicht aus leitfähigem Material und der Außenschicht aus leitfähigem Material befindet, wobei die mindestens eine Zwischenschicht aus leitfähigem Material Risse aufweist, welche ein weiteres mosaikartiges Muster definieren, um das Unterteilen der mindestens einen Zwischenschicht aus leitfähigem Material zu erleichtern, um das Einführen des flexiblen flüssigkeitsführenden Rohres in die Oberflächenkanäle zu erlauben.

4. Wärmeübertragungsplatte nach einem vorstehenden Anspruch, welche eine Haftschicht umfasst, die zwischen dem Substrat und der angrenzenden Schicht aus leitfähigem Material angeordnet ist, um die angrenzende Schicht aus leitfähigem Material an dem Substrat anzuhaften.

5. Wärmeübertragungsplatte nach Anspruch 4, wenn von Anspruch 3 abhängig, wobei die angrenzende Schicht aus leitfähigem Material Öffnungen definiert, um Kontakt zwischen mindestens einer von der Außenschicht aus leitfähigem Material und der mindestens einen Zwischenschicht aus leitfähigem Material und der Haftschicht zu erleichtern, um mindestens eine von der Außenschicht aus leitfähigem Material und der mindestens einen Zwischenschicht aus leitfähigem Material an dem Substrat anzuhaften.

6. Wärmeübertragungsplatte nach Anspruch 4 oder 5, wenn von Anspruch 3 abhängig, wobei jede von der mindestens einen Zwischenschicht aus leitfähigem Material Öffnungen definiert, um Kontakt zwischen der Außenschicht aus leitfähigem Material und der Haftschicht zu erleichtern, um die Außenschicht aus leitfähigem Material an dem Substrat anzuhaften.

7. Wärmeübertragungsplatte nach einem der Ansprüche 2 bis 6, wobei jedes andere mosaikartige Muster als das zweite mosaikartiges Muster eine Vielzahl von den Öffnungen umfasst, dieses mosaikartige Muster eine Musterbreite definiert, und die Vielzahl von den Öffnungen über diese Musterbreite positioniert sind, wobei die Vielzahl von den Öffnungen optional über die Musterbreite positioniert sind, um sich einem räumlichen Versatz zwischen der angrenzenden Schicht aus leitfähigem Material, der mindestens einen Zwischenschicht aus leitfähigem Material und der Außenschicht aus leitfähigem Material anzupassen.

8. Wärmeübertragungsplatte nach einem der Ansprüche 3 bis 7, wobei die angrenzende Schicht aus leitfähigem Material, die mindestens eine Zwischenschicht aus leitfähigem Material und die Außenschicht aus leitfähigem Material positioniert sind, um das erste mosaikartige Muster, das mosaikartige Zwischenmuster und die zweiten mosaikartigen Muster räumlich zu versetzen.

9. Wärmeübertragungsplatte nach einem der Ansprüche 3 bis 8, wobei die angrenzende Schicht aus leitfähigem Material, die mindestens eine Zwischenschicht aus leitfähigem Material und die Außenschicht aus leitfähigem Material räumlich versetzt sind, um eine entsprechende Kante des ersten mosaikartigen Musters, des mosaikartigen Zwischenmusters und der zweiten mosaikartigen Muster zu positionieren, um parallel zu sein.

10. Wärmeübertragungsplatte nach einem der Ansprüche 3 bis 9, wobei mindestens eine von der angrenzenden, Außen- und Zwischenschicht aus leitfähigem Material räumlich versetzt ist, sodass ein Scheitel des ersten mosaikartigen Musters in Richtung einer Mitte von mindestens einem der zweiten und weiteren mosaikartigen Muster positioniert ist.

11. Wärmeübertragungsplatte nach einem der Ansprüche 3 bis 10, wobei mindestens eines von den zweiten und weiteren mosaikartigen Mustern eine Breite aufweist, die nicht größer als die Breite der Oberflächenkanäle ist.

12. Wärmeübertragungsplatte nach einem der Ansprüche 3 bis 11, wobei mindestens eines von dem ersten, zweiten und weiteren mosaikartigen Muster konfiguriert ist, um:
zumindest teilweise die Oberflächenkanäle mit unterteilten Abschnitten einer jeweiligen mindestens einen von den leitfähigen angrenzenden, Außen- und Zwischenschichten beim Einführen des flexiblen flüssigkeitsführenden Rohres in die Oberflächenkanäle auszurichten;
die Oberflächenkanäle mit unterteilten Abschnitten einer jeweiligen mindestens einen von den leitfähigen angrenzenden, Außen- und Zwischenschichten auf zumindest halbem Weg entlang von Seitenwänden der Oberflächenkanäle beim Einführen des flexiblen flüssigkeitsführenden Rohres in die Oberflächenkanäle auszurichten;
die Oberflächenkanäle mit unterteilten Abschnitten einer jeweiligen mindestens einen von den leitfähigen angrenzenden, Außen- und Zwischenschichten mit einer Position, in der das flexible flüssigkeitsführende Rohr die Oberflächenkanäle beim Einführen in die Oberflächenkanäle berührt, auszurichten; und/oder
die Oberflächenkanäle mit unterteilten Abschnitten einer jeweiligen mindestens einen von den ersten, zweiten und weiteren leitfähigen Schichten mit einer Position, in der eine Tangente zum flexiblen flüssigkeitsführenden Rohr beim Einführen in die Oberflächenkanäle vertikal wird, auszurichten.

13. Wärmeübertragungsplatte nach einem der Ansprüche 3 bis 12, wobei die Risse mindestens eines von dem ersten, zweiten und weiteren mosaikartigen Muster als eines definieren von: einem regelmäßigen mosaikartigen Muster; einem unregelmäßigen mosaikartigen Muster; einem mosaikartigen vieleckigen Muster; einem regelmäßigen mosaikartigen vieleckigen Muster; einem mosaikartigen Quadrat; und einem mosaikartigen dreieckigen Muster.

14. Wärmeübertragungsplatte nach einem vorstehenden Anspruch, wobei sich die mosaikartigen Muster über mindestens jene Fläche des Substrats, welche die Oberflächenkanäle definiert, und vorzugsweise über das gesamte Substrat erstrecken.

15. Verfahren, umfassend:
Bereitstellen eines Substrats, das eine Anordnung von miteinander verbundenen Oberflächenkanälen definiert, die bemessen sind, um ein flexibles flüssigkeitsführendes Rohr aufzunehmen;
Bereitstellen einer ersten Schicht aus leitfähigem Material, welche auf dem Substrat aufliegt, und Definieren mit Rissen in der ersten Schicht aus leitfähigem Material eines ersten mosaikartiges Musters, um das Unterteilen der ersten Schicht aus leitfähigem Material zu erleichtern, um das Einführen des flexiblen flüssigkeitsführenden Rohres in die Oberflächenkanäle zu erlauben;
Bemessen des ersten mosaikartigen Musters, um eine Breite aufzuweisen, die nicht größer als eine Breite der Oberflächenkanäle ist.

## Revendications

1. Panneau de transfert de chaleur (10), comprenant :
un substrat (20) définissant un réseau de canaux de surface interconnectés (40) dimensionnés pour recevoir un tuyau de transport de fluide flexible ; et
une couche adjacente (30) de matériau conducteur recouvrant ledit substrat et ayant des fissures qui définissent un premier motif en mosaïque pour faciliter la division de ladite couche adjacente de matériau conducteur pour permettre l'insertion dudit tuyau de transport de fluide flexible dans lesdits canaux de surface, dans lequel ledit premier motif en mosaïque a une largeur qui n'est pas plus large qu'une largeur desdits canaux de surface.

2. Panneau de transfert de chaleur selon la revendication 1, comprenant une couche extérieure (60) de matériau conducteur recouvrant ladite couche adjacente de matériau conducteur, ladite couche extérieure de matériau conducteur ayant des fissures qui définissent un deuxième motif en mosaïque pour faciliter la division de ladite couche extérieure de matériau conducteur pour permettre l'insertion dudit tuyau de transport de fluide flexible dans lesdits canaux de surface.

3. Panneau de transfert de chaleur selon la revendication 2, comprenant au moins une couche intermédiaire de matériau conducteur positionnée entre ladite couche adjacente de matériau conducteur et ladite couche extérieure de matériau conducteur, ladite au moins une couche intermédiaire de matériau conducteur ayant des fissures qui définissent un autre motif en mosaïque pour faciliter la division de ladite au moins une couche intermédiaire de matériau conducteur pour permettre l'insertion dudit tuyau de transport de fluide flexible dans lesdits canaux de surface.

4. Panneau de transfert de chaleur selon une quelconque revendication précédente, comprenant une couche adhésive disposée entre ledit substrat et ladite couche adjacente de matériau conducteur pour faire adhérer ladite couche adjacente de matériau conducteur audit substrat.

5. Panneau de transfert de chaleur selon la revendication 4 lorsqu'elle est dépendante de la revendication 3, dans lequel ladite couche adjacente de matériau conducteur définit des ouvertures pour faciliter un contact entre au moins une parmi ladite couche extérieure de matériau conducteur et ladite au moins une couche intermédiaire de matériau conducteur et ladite couche adhésive pour faire adhérer au moins une parmi ladite couche extérieure de matériau conducteur et ladite au moins une couche intermédiaire de matériau conducteur audit substrat.

6. Panneau de transfert de chaleur selon la revendication 4 ou 5 lorsqu'elle est dépendante de la revendication 3, dans lequel chacune de ladite au moins une couche intermédiaire de matériau conducteur définit des ouvertures pour faciliter un contact entre ladite couche extérieure de matériau conducteur et ladite couche adhésive pour faire adhérer ladite couche extérieure de matériau conducteur audit substrat.

7. Panneau de transfert de chaleur selon l'une quelconque des revendications 2 à 6, dans lequel chaque motif en mosaïque autre que ledit deuxième motif en mosaïque comprend une pluralité desdites ouvertures, ce motif en mosaïque définit une largeur de motif et ladite pluralité desdites ouvertures sont positionnées sur cette largeur de motif, optionnellement dans lequel ladite pluralité desdites ouvertures sont positionnées sur ladite largeur de motif pour être conformes à un décalage spatial entre ladite couche adjacente de matériau conducteur, ladite au moins une couche intermédiaire de matériau conducteur et ladite couche extérieure de matériau conducteur.

8. Panneau de transfert de chaleur selon l'une quelconque des revendications 3 à 7, dans lequel ladite couche adjacente de matériau conducteur, ladite au moins une couche intermédiaire de matériau conducteur et ladite couche extérieure de matériau conducteur sont positionnées pour décaler spatialement ledit premier motif en mosaïque, ledit motif en mosaïque intermédiaire et lesdits deuxièmes motifs en mosaïque.

9. Panneau de transfert de chaleur selon l'une quelconque des revendications 3 à 8, dans lequel ladite couche adjacente de matériau conducteur, ladite au moins une couche intermédiaire de matériau conducteur et ladite couche extérieure de matériau conducteur sont décalées spatialement pour positionner un bord correspondant dudit premier motif en mosaïque, dudit motif en mosaïque intermédiaire et desdits deuxièmes motifs en mosaïque pour qu'ils soient parallèles.

10. Panneau de transfert de chaleur selon l'une quelconque des revendications 3 à 9, dans lequel au moins une parmi lesdites couches adjacente, extérieure et intermédiaire de matériau conducteur sont décalées spatialement de sorte qu'un sommet dudit premier motif en mosaïque soit positionné vers un centre d'au moins un parmi lesdits deuxièmes et autres motifs en mosaïque.

11. Panneau de transfert de chaleur selon l'une quelconque des revendications 3 à 10, dans lequel au moins un parmi lesdits deuxièmes et autres motifs en mosaïque ont une largeur qui n'est pas plus large que ladite largeur desdits canaux de surface.

12. Panneau de transfert de chaleur selon l'une quelconque des revendications 3 à 11, dans lequel au moins un parmi lesdits premier, deuxièmes et autres motifs en mosaïque est configuré pour :
aligner au moins partiellement lesdits canaux de surface sur des parties divisées d'une respective au moins une parmi lesdites couches conductrices adjacente, extérieure et intermédiaire lors de l'insertion dudit tuyau de transport de fluide flexible dans lesdits canaux de surface ;
aligner lesdits canaux de surface sur des parties divisées d'une respective au moins une parmi lesdites couches conductrices adjacente, extérieure et intermédiaire jusqu'à au moins la moitié du chemin le long de parois latérales desdits canaux de surface lors de l'insertion dudit tuyau de transport de fluide flexible dans lesdits canaux de surface ;
aligner lesdits canaux de surface sur des parties divisées d'une respective au moins une parmi lesdites couches conductrices adjacente, extérieure et intermédiaire jusqu'à une position où ledit tuyau de transport de fluide flexible est en contact avec lesdits canaux de surface lors de l'insertion dans lesdits canaux de surface ; et/ou
aligner lesdits canaux de surface sur des parties divisées d'une respective au moins une parmi lesdites première, deuxième et autres couches conductrices jusqu'à une position où une tangente audit tuyau de transport de fluide flexible lors de l'insertion dans lesdits canaux de surface devient verticale.

13. Panneau de transfert de chaleur selon l'une quelconque des revendications 3 à 12, dans lequel lesdites fissures définissent au moins une parmi lesdits premier, deuxièmes et autres motifs en mosaïque comme un parmi : un motif en mosaïque régulier ; un motif en mosaïque irrégulier ; un motif polygonal en mosaïque ; un motif polygonal régulier en mosaïque ; un hexagone en mosaïque ; un carré en mosaïque ; et un motif triangulaire en mosaïque.

14. Panneau de transfert de chaleur selon une quelconque revendication précédente, dans lequel lesdits motifs en mosaïque s'étendent sur au moins cette zone dudit substrat qui définit lesdits canaux de surface, et de préférence sur tout ledit substrat.

15. Procédé, comprenant :
la fourniture d'un substrat définissant un réseau de canaux de surface interconnectés dimensionnés pour recevoir un tuyau de transport de fluide flexible ;
la fourniture d'une première couche de matériau conducteur recouvrant ledit substrat et définissant, avec des fissures dans ladite première couche de matériau conducteur, un premier motif en mosaïque pour faciliter la division de ladite première couche de matériau conducteur pour permettre l'insertion dudit tuyau de transport de fluide flexible dans lesdits canaux de surface ;
le dimensionnement dudit premier motif en mosaïque pour qu'il ait une largeur qui ne soit pas plus large qu'une largeur desdits canaux de surface.
